# FASCICULE DE BREVET EUROPEEN

(11) **EP 0 856 423 B1**
(45) Date de publication et mention de la délivrance du brevet: **08.05.2002**
(21) Numéro de dépôt: 98101159.6
(22) Date de dépôt: 23.01.1998
(51) Int. Cl.: B60H 1/00

(54) **Registre à volets multiples, notamment pour un système de climatisation de véhicule automobile**
Luftklappe mit mehreren Klappteilen, insbesondere für ein Klimatisierungssystem für Kraftfahrzeuge
Damper with multiple shutters, in particular for an air conditioning system for motor vehicles

(30) Priorité: 29.01.1997 FR 9700953
(43) Date de publication de la demande: 05.08.1998
(73) Titulaire: VALEO CLIMATISATION, 78321 La Verrière (FR)
(72) Inventeur: Danieau, Jacques, 78590 Noisy Le Roi (FR); El Mayas, Jihad, 78990 Elancourt (FR)

(56) Documents cités:
- WO-A-96/16827
- DE-A- 2 431 065
- DE-A- 3 602 120
- GB-A- 1 296 921
- US-A- 4 610 197

## Description

L'invention concerne le domaine de l'aérothermique, appliquée notamment aux installations de climatisation pour véhicules automobiles.
Elle concerne plus précisément un registre à volets multiples permettant de faire varier le débit d'un flux d'air en fonction de la position des volets du registre.
De façon en elle-même connue, ces registres possèdent une pluralité de volets synchronisés par une commande unique, comme cela est décrit par exemple dans le WO-A-96/16827.
La plupart du temps, ces volets pivotants sont articulés autour de leur axe central de symétrie, et sont entraînés simultanément, tous dans le même sens, par un mécanisme tel qu'une biellette.
L'utilisation d'un tel registre provoque l'introduction d'une composante latérale dans le flux d'air, qui va se trouver décalé vers le haut ou vers le bas du châssis portant les volets, l'homogénéité du flux n'étant établie qu'à pleine ouverture.
De la sorte, pour toutes les positions intermédiaires entre la fermeture et la pleine ouverture, on pourra avoir un mauvais brassage de l'air, par exemple à la surface d'un échangeur de chaleur ou dans une chambre de mélange situés en aval du registre à volets multiples.
L'un des buts de la présente invention est de proposer une structure de registre à volets multiples qui permette de pallier ces inconvénients en donnant, pour toutes les positions intermédiaires du registre, un flux aval essentiellement dépourvu de composante latérale, et donc beaucoup plus efficace sur le plan de la conception du système de climatisation.
Le registre de l'invention est, d'une manière en elle-même connue, et par exemple dans le document GB 1 296 921, un registre à volets multiples comprenant un cadre portant une pluralité de volets pivotants montés à rotation autour d'axes parallèles entre eux, cette rotation étant commandée par un mécanisme d'entraînement commun de manière à faire varier la position des volets entre une position de débit maximal dans lequel les volets présentent une inclinaison minimale par rapport à la direction du flux d'air traversant le registre, et une position de débit nul ou minimal dans lequel les volets présentent une inclinaison maximale par rapport à cette même direction et dont le mécanisme d'entraînement commande le pivotement des volets du registre de manière que ces volets pivotent chacun d'un même angle mais en sens opposés d'un volet au suivant.
Selon l'invention, le bord libre des volets du registre porte, dans la région de contact avec le volet adjacent, un joint déformable d'étanchéité et d'appui, qui présente à son extrémité libre une surépaisseur arrondie en forme de bourrelet.

Selon un certain nombre de caractéristiques subsidiaires avantageuses :
- le nombre de volets est pair ;
- dans une forme de réalisation, dans la position de débit nul les bords libres respectifs des volets adjacents viennent en contact entre eux ; dans ce cas, le bord libre des volets porte avantageusement, dans la région de contact avec le volet adjacent, un joint déformable d'étanchéité et d'appui, notamment un joint surmoulé sur le volet, et le joint présente plus particulièrement à son extrémité libre une surépaisseur arrondie en forme de bourrelet ;
- l'extrados et/ou l'intrados des volets porte(nt) des rugosités réductrices de bruit aérodynamique, propres à modifier localement l'écoulement du flux d'air par effet d'adhérence de la couche limite.

D'autres caractéristiques et avantages de l'invention apparaîtront à la lecture de la description détaillée ci-dessous d'un exemple de réalisation, faite en référence aux dessins annexés.
La figure 1 est une vue schématique, en coupe, de divers éléments d'un système de climatisation de véhicule automobile.
Les figures 2 et 3 montrent les positions des volets du registre, respectivement en position d'ouverture maximale et en position de fermeture.
La figure 4 est une vue perspective d'un volet individuel.
La figure 5 montre la manière dont est obtenue l'étanchéité de fermeture des volets du registre.
La figure 6 illustre une variante de joint d'étanchéité à double lèvre utilisable avec la structure de la figure 5.
La figure 7 illustre un mode de réalisation du registre selon l'invention.
La figure 8 est homologue de la figure 3, pour ce mode de réalisation de l'invention.
Les figures 9 et 10 sont des vues en coupe d'un volet du registre de l'invention, portant des moyens d'atténuation du bruit aérodynamique.
Les figures 11, 12 et 13 sont des vues en plan des volets des figures 9 et 10, vus respectivement selon les lignes XI-XI, XII-XII et XIII-XIII.

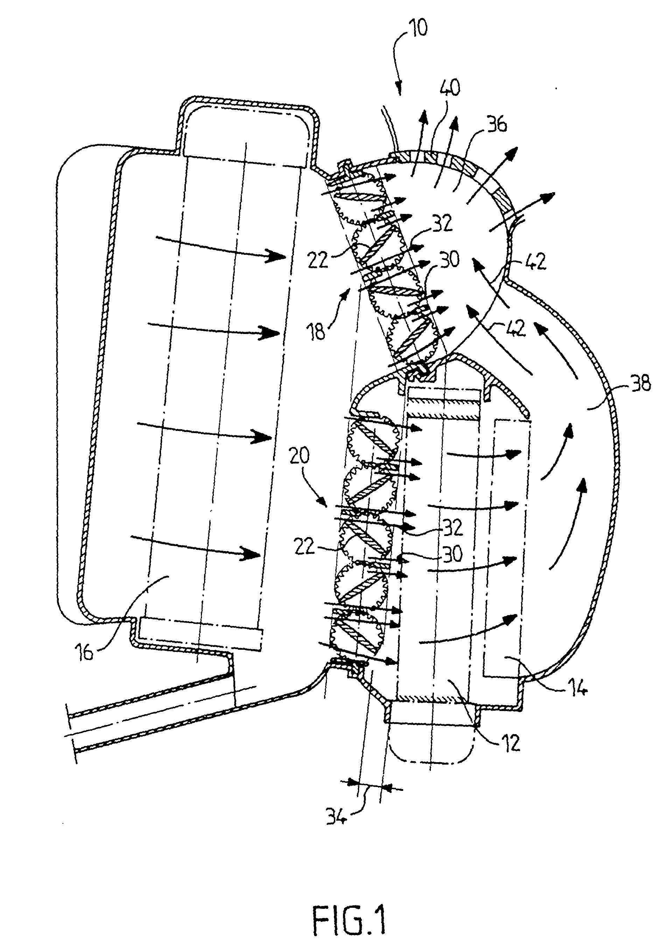

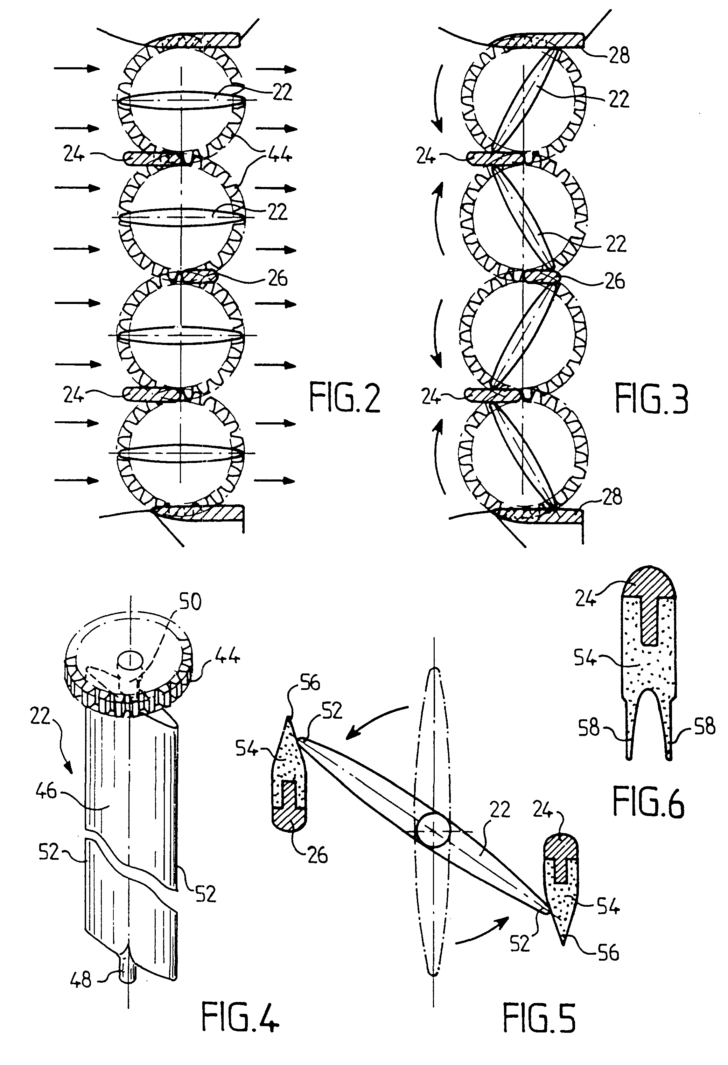

La figure 1 représente schématiquement un système 10 de climatisation pour automobile, comportant un radiateur 12, éventuellement une résistance 14, notamment une résistance CTP, éventuellement un évaporateur 16 d'un système de réfrigération, et deux séries de registres à volets multiples 18, 20 permettant de doser les flux d'air en zone basse (air chaud) et en zone haute (air froid ou refroidi).
Chacun des ces registres 18, 20 présente une structure semblable, avec une pluralité de volets articulés 22 susceptibles de pivotement autour de leur axe central longitudinal.
Comme on peut le voir plus précisément sur les figures 2 et 3, la rotation de ces volets est, de façon caractéristique de l'invention, symétrique d'un volet au suivant, c'est-à-dire que, pour un volet tournant dans le sens des aiguilles d'une montre, le volet adjacent tournera dans le sens inverse.
Ces différents volets sont montés sur un cadre pourvu de cloisons intermédiaires ou entretoises 24, 26 faisant office de raidisseurs (pour rigidifier la structure de l'ensemble) et permettant: d'autre part une fermeture étanche du registre : en effet, en position fermée (figure 3), les bords libres de chaque volet viennent en butée contre les cloisons 24 ou 26 (ou contre le bord du cadre 28 pour les volets d'extrémité), ce contact étant rendu étanche de la manière qui sera exposée plus bas en référence aux figures 5 et 6.
L'avantage de cette configuration tient au fait que le flux d'air en sortie du registre ne présente plus de composante latérale, comme cela a été illustré par les flèches 30 et 32, et ceci quelle que soit la position du registre.
L'absence de composante latérale dépendant de la position des volets du registre permet, en partie basse, de réduire notablement la distance entre le registre inférieur 20 et le radiateur 12 puisque celui-ci sera ventilé par un flux d'air particulièrement homogène et perpendiculaire à la plus grande dimension du radiateur.
Ce rapprochement permet de rendre plus compact l'ensemble du système de climatisation côté radiateur, malgré la présence éventuelle d'une résistance électrique 14.
En ce qui concerne le registre 18 en partie haute, le flux d'air froid provenant de l'évaporateur 16 (ou, simplement, de la prise d'air frais) va traverser le registre 18 perpendiculairement à sa plus grande dimension jusqu'à la chambre de mélange 36 où ce flux d'air froid va se combiner avec le flux d'air chaud provenant du radiateur 12 via la conduite 38, l'air ainsi mélangé étant diffusé dans l'habitacle via une grille perturbatrice 40.
La structure particulière du registre de l'invention permet que les flux respectifs d'air froid et d'air chaud se rencontrent pratiquement perpendiculairement (flèches 30, 32, d'une part et 42, d'autre part sur la figure 1). Le mélange est ainsi réalisé de façon optimale et régulière, indépendamment de la position particulière des volets du registre 18, qui ne perturbe pas la direction d'écoulement du flux d'air froid.
La figure 4 montre la structure d'un volet, qui peut être réalisé sous forme d'une pièce monobloc moulée, métallique ou en matière plastique, comprenant un pignon 44 permettant l'entraînement de la pale 46 qui pivote autour d'un tourillon 48. Le pignon 44 est relié à la pale 46 par un axe rigide 50.
L'engrènement des pignons 44 permet un entraînement aisé en sens inverse d'un volet au suivant. L'un des pignons du registre est entraîné, de manière en elle-même classique, par un système de biellette, de came, de micromoteur, etc. pour adapter la position des volets du registre à la température de climatisation recherchée.
Sur la figure 5, on a illustré une manière, non revendiquée, dont est obtenue l'étanchéité à la fermeture du registre. Dans la configuration fermée, chaque bord libre 52 du volet 22 vient en contact avec l'entretoise 24, 26 qui est pourvue, pour assurer une étanchéité satisfaisante, d'un joint souple 54 d'étanchéité et d'appui, par exemple surmoulé, comportant une partie effilée 56 contre laquelle vient en appui le bord libre 52 du volet (et, symétriquement, le bord libre du volet adjacent). En variante, comme illustré figure 6, on peut prévoir un joint surmoulé 54 comportant deux lèvres distinctes 58, 58 destinées chacune à venir en contact avec des bords libres des deux volets adjacents.

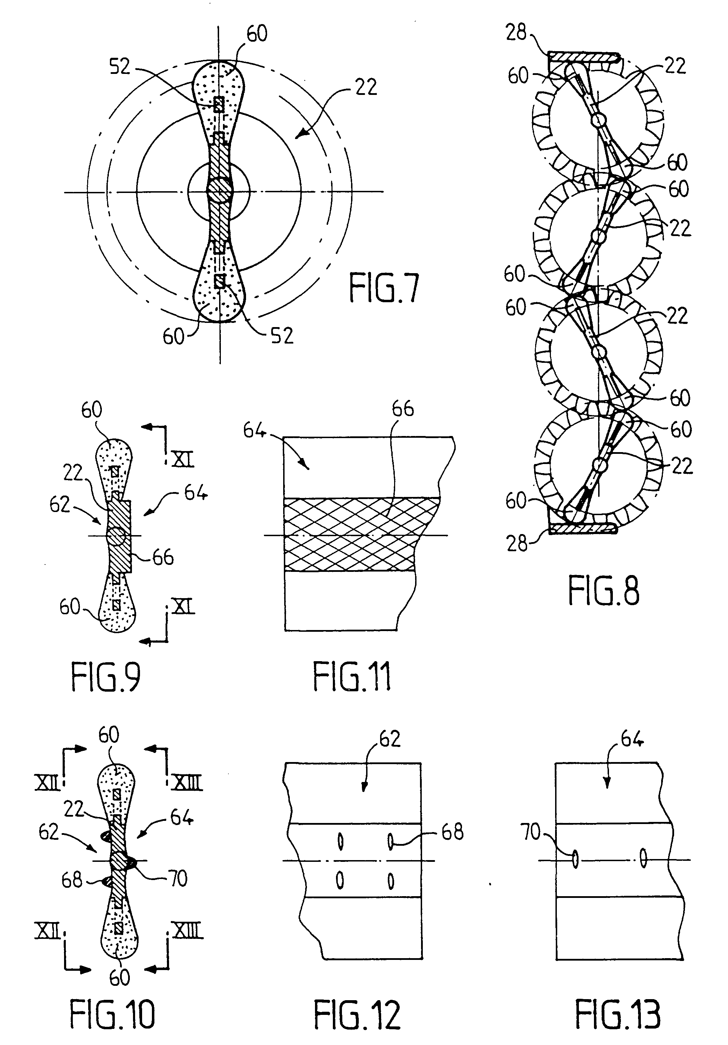

Les figures 7 et 8 illustrent l'invention dans laquelle le registre est dépourvu des entretoises 24, 26, permettant ainsi d'augmenter la section de passage de l'air et de diminuer corrélativement la résistance à l'air opposée par le registre en position totalement ou partiellement ouverte.
Pour pouvoir assurer une fermeture étanche, les bords libres 52 de chaque volet 22 sont pourvus d'un joint 60, par exemple surmoulé, l'obturation étant réalisée par venue en contact de deux joints opposés 60, comme on peut le voir sur la figure 8 qui illustre le registre en position complètement fermée (les bords libres les plus extrêmes venant en contact avec les côtés 28, 28 du cadre du registre.

Le joint surmoulé 60 présente avantageusement, comme illustré sur les figures, une forme fortement arrondie à son extrémité distale, semblable à un bourrelet ou une goutte, ce qui permet d'atténuer les sifflements aérodynamiques dus aux changements de section de réglage du débit d'air.
Selon un autre aspect de la présente invention, on prévoit, de disposer sur les volets des moyens de réduction du bruit lié au décollement de la couche d'air sur les pales des volets.
En effet, du point de vue aérodynamique, la pale de chaque volet va se présenter comme une surface inclinée d'un angle variable par rapport à la direction du flux d'air, cette variation de l'angle provoquant une variation du débit, typiquement de 0 à 300 kg/h.
On constate que, sous une inclinaison de l'ordre de 50° environ, un bruit de hurlement se crée. Ce phénomène est lié au décollement de la couche limite côté extrados de la pale inclinée ; de part et d'autre de la couche limite décollée il s'établit une différence de pression qui génère le bruit de hurlement.
De façon caractéristique de l'invention, l'extrados 64 et/ou l'intrados 66 est (sont) pourvu(s) à la surface du volet d'un obstacle dont le rôle est de créer une adhérence supplémentaire de la couche limite sur la surface de la pale du volet, ceci afin de réduire le bruit aérodynamique engendré.
Ces obstacles peuvent prendre diverses formes, illustrées figures 9 à 13.
Une première forme de réalisation, illustrée figures 9 et 11, consiste à prévoir dans tout ou partie de la partie centrale de la pale du volet (la partie située entre les deux joints d'étanchéité 60) un quadrillage 64, par exemple venu de moulage, sur l'une ou les deux faces 62 et 64.
En variante, comme illustré figures 10, 12 et 13, on peut prévoir des obstacles sous forme de reliefs isolés 68 ou 70, qui peuvent être disposés sur une ou plusieurs lignes, ou selon une configuration plus complexe, ou encore de manière aléatoire, également sur l'une ou les deux faces 62, 64 de la pale du volet.

## Revendications

1. Un registre à volets multiples, notamment pour un système de climatisation (10) de véhicule automobile, ce registre comprenant un cadre portant une pluralité de volets pivotants (22) montés à rotation autour d'axes parallèles entre eux, cette rotation étant commandée par un mécanisme d'entraînement commun (44) de manière à faire varier la position des volets entre une position de débit maximal dans lequel les volets présentent une inclinaison minimale par rapport à la direction du flux d'air traversant le registre, et une position de débit nul ou minimal dans lequel les volets présentent une inclinaison maximale par rapport à cette même direction, registre dont le mécanisme d'entraînement commande le pivotement des volets du registre de manière que ces volets pivotent chacun d'un même angle mais en sens opposés d'un volet au suivant, et dans lequel, dans la position de débit nul, les bords libres respectifs des volets adjacents viennent en contact entre eux,
**Caractérisé en ce que**, le bord libre (52) des volets du registre porte, dans la région de contact avec le volet adjacent, un joint déformable (60) d'étanchéité et d'appui, qui présente à son extrémité libre une surépaisseur arrondie en forme de bourrelet.

2. Le registre de la revendication 1, **caractérisé par** un nombre pair de volets.

3. Le registre selon l'une quelconque des revendication 1 ou 2, dans lequel le joint déformable est un joint surmoulé sur le volet.

4. Le registre selon l'une quelconque des revendication 1 à 3, dans lequel l'extrados (62) et/ou l'intrados (64) des volets porte(nt) des rugosités (66 ; 68, 70) réductrices de bruit aérodynamique, propres à modifier localement l'écoulement du flux d'air par effet d'adhérence de la couche limite.

## Patentansprüche

1. Mehrfachklappenanordnung, insbesondere für eine Kraftfahrzeugklimaanlage (10), wobei die Anordnung einen Rahmen umfaßt, der eine Vielzahl an schwenkbaren Klappen (22) stützt, die drehbar um zueinander parallele Achsen montiert sind, wobei diese Rotation gesteuert wird über einen gemeinsamen Antriebsmechanismus (44), so daß die Position der Klappen verändert wird zwischen einer Maximaldurchsatzposition, in welcher die Klappen eine minimale Neigung mit Bezug auf die Richtung der Luftströmung aufweisen, die die Anordnung durchquert, und einer Null- oder Minimaldurchsatzposition, in welcher die Klappen eine maximale Neigung in Bezug auf die genannte Richtung zeigen, wobei der Antriebsmechanismus das Verschwenken der Anordnung in solch einer Weise steuert, daß die Klappen jeweils um ein entsprechendes Ausmaß verschwenkt werden, jedoch in entgegengesetzter Richtung von einer Klappe zur nächsten, und wobei in der Nulldurchsatzposition die jeweiligen freien Ränder von benachbarten Klappen miteinander in Berührung treten, **dadurch gekennzeichnet, daß** der freie Rand (52) von Klappen der Anordnung in dem Berührungsbereich mit der benachbarten Klappe ein verformbares Dichtheits- und Anlageteil (60) trägt, welches an seinem freien Ende eine abgerundete wulstförmige Überdicke aufweist.

2. Anordnung nach Anspruch 1, **dadurch gekennzeichnet, daß** die Anzahl an Klappen gerade ist

3. Anordnung nach einem der Ansprüche 1 oder 2, bei welchem die verformbare Dichtung eine an der Klappe angespritzte Dichtung oder ein an die Klappe angespritztes Teil ist.

4. Anordnung nach einem der Ansprüche 1 bis 3, bei welchem die Ober- und/oder Unterseite (62; 64) von Klappen Unebenheiten (66; 68; 70), trägt bzw. tragen, aerodynamische Geräusche reduzierend, geeignet, um lokal die Strömung des Luftflusses durch Anhaftungseffekt der Grenzschicht zu verändern.

## Claims

1. A multi-valve register, especially for a motor vehicle air conditioning system (10), the said register comprising a frame carrying a plurality of pivoting valves (22) mounted for rotation about axes which are parallel to each other, the said rotation being ..controlled by a common drive mechanism (44) such as to cause the position of the valves to vary between a maximum flow position, in which the valves have minimum inclination with respect to the flow direction of air passing through the register, and a zero or minimum flow position in which the valves have maximum inclination with respect to the said direction, wherein the drive mechanism of the register controls the pivoting movement of the valves in the register in such a way that all the valves pivot through the same angle' but each one pivots in the opposite direction to the next valve, and wherein, in the zero position, the respective free edges of adjacent valves come into contact with each other, **characterised in that** the free edge (52) of the valves in the register carry, in the region of contact with the adjacent valve, a deformable sealing and contact element (60), which has at its free edge a rounded, thickened portion in the form of a bead.

2. The register of Claim 1, **characterised by** an even number of valves.

3. The register of Claim 1 or Claim 2, wherein the deformable sealing element is a seal formed by being moulded over the valve.

4. The register according to any one of Claims 1 to 3, wherein roughened zones (66; 68, 70) are carried by the outer side (62) and/or the inner side (64) of the valves whereby to reduce aerodynamic noise, and are adapted to modify the flow of the air stream locally by boundary layer attachment.
